(19) Europäisches Patentamt
European Patent Office
Office européen des brevets

(11) EP 1 975 191 A1

(12) **EUROPEAN PATENT APPLICATION**

(43) Date of publication:
**01.10.2008 Bulletin 2008/40**

(21) Application number: **07006583.4**

(22) Date of filing: **29.03.2007**

(51) Int Cl.:
***C08G 69/18*** *(2006.01)* ***C08G 69/20*** *(2006.01)*
***C08L 77/02*** *(2006.01)*

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **L. Brüggemann KG**
**74076 Heilbronn (DE)**

(72) Inventor: **Titzschkau, Klaus**
**74076 Heilbronn (DE)**

(74) Representative: **Grünecker, Kinkeldey, Stockmair & Schwanhäusser**
**Anwaltssozietät**
**Leopoldstrasse 4**
**80802 München (DE)**

(54) **Fiber reinforced anionic polyamide composites for structural applications and the manufacturing thereof**

(57) The present invention relates to a polymerizable composition for anionic polyamide-6 composites comprising a lactam monomer, an initiator, and an activator according to formula (I)

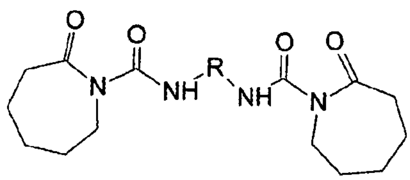

(I)

wherein R is a divalent aromatic moiety.



Printed by Jouve, 75001 PARIS (FR)

## Description

### Field of the Invention

The present invention relates to a polymerizable composition and to a method for the production of fiber reinforced polyamide (PA) composites, in particular for large-dimensioned structures such as wind turbine rotor blades.

### Introduction

Offshore wind power represents an important measure for reducing $CO_2$-emissions. Among the main requirements of wind turbines, their blades must be particularly durable and sustainable. Current efforts therefore aim at improving their resistance towards fatigue to effectively increase their lifetime, thus reducing the frequency of maintenance which is necessary for their operation. In addition to this, efforts are also put toward the development of economic and environmentally friendly manufacturing processes, in procedures for installation and dismantling, and in the re-use of materials.

Recent research has therefore concerned manufacturing processes for large thermoplastic composite (TPC) blades which potentially offer a higher resistance to fatigue than their thermoset-based counterparts currently used such as fiber-reinforced epoxies and vinyl esters, in particular due to the increased toughness of the matrix. In addition to this, TPC blades can be remolded upon melting, thus enabling the re-use of the material. In this respect, thermoplastic anionic PA composites are of particular interest, belonging to a class of fully recyclable materials which, compared to typical epoxies, offer an increased toughness and improved abrasion resistance for only a slight reduction in tensile strength and modulus. As opposed to these, thermo hardening polymers can not be recycled or welded.

A further aspect which is of particular importance in the field of large-dimensioned structural parts such as wind turbine blades is their method of production. Thus, besides finding a suitable material for the specific structural application, an appropriate process for their manufacture involves numerous challenges due to the often unusually large size of the composite parts. This also concerns economical aspects of the production process since the radical up-sizing of conventional casting methods in order to meet the present needs may involve costly measures which make their profitability questionable.

Methods for the manufacture of composites which are known from the state of the art include reinforced reaction injection molding (RRIM), structural reaction injection molding (SRIM), and vacuum infusion (VI).

In reinforced reaction injection molding, the resin components (monomer, activator and initiator) are mixed together with the reinforcement (short fibers/spheres) in an inert atmosphere before being cast or injected into a mould, after which the polymerization of the composite initiates. Since the reinforcement is stored in an inert atmosphere together with the resin, extremely reactive fiber coatings (sizings, silanes) can be used which, normally, would already deactivate due to atmospheric moisture. Accordingly, this production method results in a strong fiber-to-matrix bond. Rapid polymerization of the resin, however, limits the size and thickness of the composite parts that can be produced. In addition to this, the premixing of the reinforcement with the resin limits the fiber content in the composite and provides no control over the fiber orientation. Composites obtained with this method are therefore not suited for large-dimensioned structural applications.

In structural reaction injection molding, the resin components are mixed in an inert atmosphere and are infused under pressure into a mould with pre-placed dry fibers (random mats or UD/woven fabrics), after which polymerization of the composite initiates. Considerable clamping forces are, however, required to keep the mould tight which, in addition to the rapid polymerization of the resin, limits the size and thickness of the composite parts which may be produced. In addition to this, since the reinforcement material is not stored in an inert atmosphere, only fiber coatings (sizings, silanes) displaying a moderate reactivity can be used, as a result of which only moderate fiber-to-matrix bonding may be achieved. These composites are therefore also not suitable for large-dimensioned structural applications.

Finally, in vacuum infusion, the molding process involves pre-placing dry fibers on a solid mould half, which defines the geometry of the part. A flexible mould half of vacuum foil is then applied together with a sealant tape to bag the fiber lay-up in an airtight manner. Applying vacuum then compacts the bagged fibers and induces a resin flow from inlet to outlet. After impregnating the fibers, polymerization then initiates. Since the viscosity of thermoplastic melts is too high for infusion, reactive processing using a low viscosity resin is required, i.e. a low viscosity monomer melt is injected between the fibers followed by in situ polymerization of the monomer into a thermoplastic matrix. Furthermore, since the atmospheric pressure is the clamping force for the mould halves, there is practically no limitation to the size of the parts which may be produced using this method. The VI process is therefore commonly used for the manufacturing of (large-dimensioned) thermoset composites.

In both VI and SRIM, however, increasingly dense fibers make filling slow, such that the fast polymerization systems that are used in RRIM cannot be used since premature polymerization does not allow the filling of larger moulds. When using densely packed fibers in vacuum infusion, a less reactive initiator-activator combination must therefore be

used to render more time to complete infusion. At high temperatures, polymerization is faster, consequently reducing the allowable infusion time.

Current limitations of these methods in structural applications are caused by the fact that commercially used activator-initiator combinations cause rapid polymerization which limits the content that can be added as reinforcement and does not allow large-dimensioned mould filling thus limiting the maximum size of the composites that can be manufactured. Furthermore, compositions with said activator-initiator combinations do not form strong fiber-to-matrix bonds which is an essential feature for structural applications of composites. Finally, large amounts of reinforcing materials in composites presently require increased initiator concentrations resulting in increased concentrations of low molecular weight materials which lead to sticky surfaces of the resulting composite.

Object of the Present Invention

It is therefore the object of the invention to provide anionic polyamide (APA) composites displaying a higher fiber content, a higher control of fiber orientation, an improved fiber-to-matrix interface, a lower void content, and a lower oligomer concentration, and which can be manufactured in large dimensions and with more integrated parts.

Brief Description of the Invention

The object of the invention is achieved by a polymerizable composition as defined in claim 1, an APA composite obtainable from the polymerizable composition as defined in claim 18 and a process for the production of said composite as defined in claim 10.

The polymerizable composition of the invention for APA composites comprises a lactam monomer, a reinforcing agent, an initiator, and an activator according to formula (I)

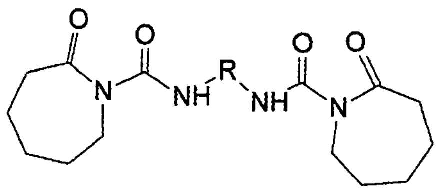

(I)

wherein R is a divalent aromatic moiety.

The invention further relates to a process for the production of an APA composite comprising the steps of (a) infusing the polymerizable composition of the invention into a mold at a temperature below the temperature of curing, and (b) increasing the mold temperature for curing.

Finally, the invention relates to APA composites obtainable from said composition and process, in particular to large-dimensioned structural composites such as wind turbine blades, structural and interior automotive parts, aeronautic and aerospace parts, pressure vessels, and oil- or gas-pipelines, and sports and leisure equipment.

Preferred embodiments of the invention are set forth in the sub-claims.

Description of the Figures

Figure 1 a displays the reaction between a carbamoyllactam isocyanate species and the surface bound amino group of a reinforcing agent to form a fiber-to-matrix urea link.

Figure 1 b: Reaction sequence for the anionic polymerization of caprolactam into polyamide-6 using a carbamoyllactam-caprolactam salt (activator-initiator) combination.

Figure 2: Conversion-time relations for a common activator-initiator combination (fast system) and for a combination according to the present invention (slow system).

Detailed Description of the Invention

In the present invention, the specific behavior of the polymerizable composition of the invention may be obtained

by using a lactam magnesium halide salt or a lactam calcium halide salt as the initiator in combination with carbamoyllactam activator according to the following formula (I):

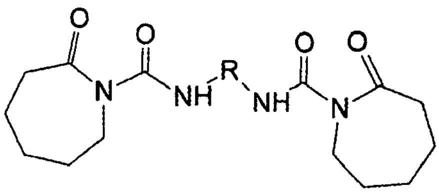

(I)

wherein R stands for a divalent or higher valent aromatic moiety, said moiety originating from the respective isocyanate which has been blocked with lactam. The term aromatic moiety as used in the present application defines a moiety comprising an aromatic unit where at least one of the bonds N(H)-R in compound (I) is a covalent bond linking a group N(H) directly to an aromatic unit (i.e. without a linking group, such as -CH2-). R is preferably selected from the group of divalent aromatic moieties consisting of

2,4-tolylene: 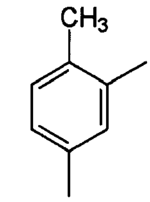 and 2,6 tolylene: 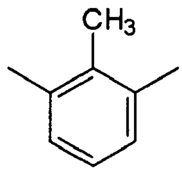

originated from toluene-diisocyanate (TDI);

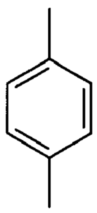 2,4-phenylene, originated from 2,4-phenylene-diisocyanate;

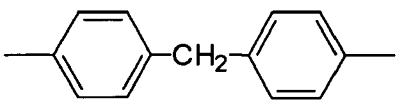 di-phenylene-methane, originated from methylene diphenyl 4,4'-diisocyanate (MDI);

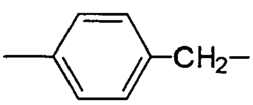 and $\alpha$,4-tolylene; originated from toluene-$\alpha$,4-diisocyanate

In particular, 2,4-tolylene, 2,6-tolylene, and $\alpha$-4-tolylene are preferred, originated from lactam blocked toluene diisocyanate (TDI) and toluene-$\alpha$,4-diisocyanate.

The aromatic activator according to formula (I) is able to dissociate at a relatively low temperature to an isocyanate and caprolactam according to the following equilibrium reaction:

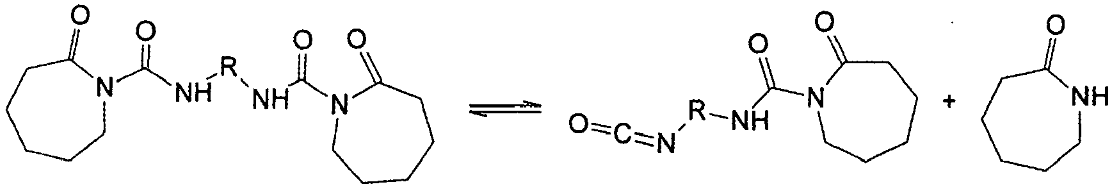

The dissociation has the effect of creating an isocyanate group which can react with the sizing of the reinforcing agents such that the bonding of said reinforcing agents to the matrix is enhanced. For example, the isocyanate groups of the dissociated activator may form urea-links to an aminosilane group of a reinforcing agent (Figure 1a). Due to the difunctional nature of the activator, one side bonds to the reinforcing agent, whereas the other may initiate polymer chain growth (Figure 1b).

This is not the case for aliphatic carbamoyllactam groups which tend to dissociate at higher temperatures, at which the anionic polymerization reaction is initiated. The exclusive use of aliphatic carbamoyllactam groups therefore leads to composites displaying only weak fiber-to-matrix bonding, such that the polymer matrix can shrink freely (e.g. due to polymerization and crystallization) thus introducing voids in the composites. The resulting composites are therefore not suitable for structural applications.

More specifically, in anionic polyamide polymerization the first step consists in the formation of anions due to the dissociation of metal caprolactam salts used as the initiator. The reaction is further enhanced by the use of an activator. Complex formation between the metal cations of the initiator and the activator increases the level of dissociation of the initiator and therefore increases the concentration of caprolactam anions, thus increasing the reaction rate. In the particular activator-initiator combination of the invention, however, the carbamoyllactam activator is not capable of complexing the cation of the initiator until it has reacted with an anion of said initiator (Figure 1 b). Due to this preliminary reaction step which is slow, the polymerization reaction in the present system is effectively delayed compared to fast polymerizing systems (Figure 2).

When using aromatic carbamoyllactam derivatives according to the present invention, the delay in polymerization is further increased due to the fact that it may dissociate at lower temperatures compared to its aliphatic homologues. Accordingly, the use of an activator-initiator combination according to the present invention has the combined effect of improving the fiber-to-matrix interface and increasing the delay in the polymerization reaction.

In the polymerizable composition of the invention, it is preferred that the activator is a combination of an aromatic carbamoyllactam according to formula (I) and a further activator selected from the group consisting of aliphatic carbamoyllactam compounds. Examples of said activators are lactam blocked 1,6-hexane-diisocyanate, lactam blocked isophorone-diisocyanate, lactam blocked xylylene-diisocyanate, lactam blocked hexane-1,4-diisocyanate, and lactam blocked methylene-di-cyclohexane-4,4'-diisocyanate. Most preferably, a combination of an aromatic carbamoyllactam compound according to formula (I) and lactam blocked 1,6-hexane-diisocyanate is used.

In the invention, the preferred molar ratio of the aromatic carbamoyllactam activator of formula (I) to an aliphatic activator ranges from 1 to 3. In particular, a molar ratio of 1 is used.

The total amount of activator in the polymerizable composition of the invention preferably ranges from 0.2 to 5 mol% based on the amount of lactam which is used. Preferably, the concentration is 0.6 to 2 mol%.

As the initiator are preferred lactam magnesium halides such as for example caprolactam magnesium bromide and caprolactam magnesium chloride; mixtures of bis-lactam magnesium and magnesium-di-halide in molar ratios ranging from 1 to 2; Grignard compounds: RMgX, wherein X is a halide selected from chloride, bromide, or iodode, and R is an alkyl or a cyclic alkyl compound consisting of 1 to 6 C-atoms; lactam calcium halides like lactam calcium chloride and lactam calcium bromide. In particular caprolactam magnesium bromide is preferred.

The amount of initiator in the polymerizable composition of the invention preferably ranges from 0.2 to 10 mol% with respect to the lactam used. Preferably, the concentration is 0.6 to 5 mol%.

The activator-initiator molar ratio which is used in the polymerizable composition of the invention preferably ranges from 1 to 5. In particular, a molar ratio of 1 to 2 is used.

Reinforcing agents used in the composition of the invention are preferably chosen from the group consisting of milled, chopped, woven, non-woven, or continuous glass fibers; rock wool fibers; mineral wool fibers; organic fibers and carbon fibers. In particular, glass and carbon fibers are preferred.

It is preferred that the content of reinforcing agent in the polymerized product ranges from 5 to 70 vol%. In VI 40 to 60 vol% are preferred.

Among the lactam monomers which may be used in the present invention, $C_4$- to $C_{-16}$ cyclic lactam compounds are preferred. In particular, the lactam monomer is selected from the group consisting of caprolactam, enantiolactam,

capryllactam, and laurylactam. Most preferably, caprolactam is used.

As a result of the present findings, a process for the production of an anionic polyamide composite has been developed wherein the polymerizable composition of the invention is used. Said process comprises a first step which is slow and provides the necessary time for infusing large molds and a second curing step of which the speed determines the properties of the final polymer product. According to the invention, reinforcing agents may be pre-placed in the mold prior to the infusion process.

At the temperature at which the infusion process takes place, the aromatic activator of the polymerizable composition according to the present invention is predominantly dissociated, such that it may bind to the reinforcing agent to a large extent by means of its isocyanate functionality. As a consequence, the interface is stronger and the resin is prevented from shrinking such that a significant reduction in void content may be achieved.

It must, however, be prevented that the aromatic activator already bonds to the reinforcing agent during infusion since this would result in the filtering out of the activator. Thus, to achieve infusion with a homogeneously distributed activator it is necessary to infuse the reinforcing agent at a low mold temperature, i.e. low enough to prevent filtering but high enough to keep the caprolactam liquid, followed by rapidly increasing the temperature of the mold with the infused reinforcing agent to the desired curing temperature such that a high degree of conversion may be achieved. In addition to this, infusion at a low processing temperature greatly increases the maximum size of composite parts that can be infused.

When using the process of the invention for manufacturing composites containing large amounts of reinforcing agent, increased concentrations of initiator are needed. As a result of this, however, the formation of low molecular weight by-products is promoted, such that the composite product displays a reduced modulus and has a sticky surface due to the diffusion of these by-products to its surface. In the process of the invention, this effect is reduced by using a caprolactam salt as the initiator in combination with 2-pyrrolidone as co-initiator, such that at the same speed of polymerization a lower concentration of the caprolactam salt is needed and the amount of low molecular weight material is reduced.

In the polymerizable composition of the invention it is preferred that 0.025 mol% to 0.125 mol% of 2-pyrrolidone is used. In particular, 0.07 mol% to 0.08 mol% are used.

Accordingly, by using a stepped mold temperature as defined in the process of the invention, it is possible to obtain a homogeneous composite with a strong fiber-to-matrix interface and a high degree of polymerization.

In the process of the present invention, the preferred methods for the infusion step include vacuum infusion, structural reaction injection molding, reinforced reaction injection molding, resin transfer molding. In particular, a vacuum infusion process is used.

Furthermore, it is preferred that the process of the invention be prepared and conducted under an inert atmosphere since atmospheric moisture may impair fiber-to-matrix bonding.

In said process, the polymerizable composition is preferably infused at a temperature ranging from 80 to 180°C. More preferred are temperatures ranging from 100 to 150°C, in particular 130 to 140°C. During the infusion step, the mold is preferably heated to a temperature ranging from 90 to 200°C during the infusion step. More preferred are mold temperatures ranging from 140 to 200°C, in particularfrom 160 to 180°C.

The composition is preferably infused under reduced pressure. In particular, it is preferred that the pressure during infusion ranges from 150 to 400 mbar.

The preferred temperature for curing ranges from 130 to 200°C, in particular from 160 to 180°C.

Reinforcing agents which may be pre-placed in the process of the invention are preferably selected from the group consisting of woven or non-woven glass fibers; rock wool fibers; mineral wool fibers; organic fibers and carbon fibers. In particular glass and carbon fibers are preferred.

The composite of the invention encompasses in particular large-dimensioned structural composites such as wind turbine blades, structural and interior automotive parts, aeronautic and aerospace parts, pressure vessels, oil- or gas pipelines and other off-shore equipment, as well as sports and leisure equipment.

## Determination methods

### Density, fiber content and void content

Prior to testing, all specimens were dried in a vacuum oven at 50 mbar and 70°C for at least 85 hours.

The density of composite samples ($\rho_{c_measured}$) was determined by displacement according to ASTM D792 (Test Method A) using a Mettler AG204 DeltaRange® microbalance.

The fiber weight content ($W_f$) was determined by thermal cleaning at 565°C followed by cooling in a desiccator prior to weighing.

The density of the matrix ($\rho_m$) was calculated from the densities at 23°C of the monomer ($\rho_{mon}$ = 1.06 g/cm$^3$), the amorphous phase of the polymer ($\rho_{am}$ = 1.08 g/cm$^3$) and crystalline phase ($\rho_{cr}$ = 1.24 g/cm$^3$, $\alpha$-phase) using the

rule of mixtures and the results of previously conducted crystallinity ($X_c$) and conversion (DOC) measurements, see Equation 1.

After calculating the density of the composite ($\rho_{c_calculated}$) in a similar way according to Equation 2, the void content ($V_v$) is determined with Equation 3. The density of the glass fabrics ($\rho_f$ = 2.62 g/cm$^3$) was provided by the manufacturer.

$$\rho_m = (1 - DOC) \cdot \rho_{mon} + DOC \cdot X_c \cdot \rho_{cr} + DOC \cdot (1 - X_c) \cdot \rho_{am} \qquad (1)$$

$$\rho_{c_calculated} = W_f \cdot \rho_f + (1 - W_f) \cdot \rho_m \qquad (2)$$

$$V_v = \frac{\rho_{c_calculated} - \rho_{c_measured}}{\rho_{c_calculated}} \cdot 100\% \qquad (3)$$

Inter-Laminar Shear Strength (ILSS)

For determination of the ILSS, short beam shear tests were conducted on a Zwick-Roell Z250 25 ton force machine according to the ASTM D-2344 norm. A three point bending jig equipped with 3mm diameter supports and a 6mm diameter loading nose was adjusted to a span of 11 mm to perform tests on rectangular shape specimens (16 x 5.5 x 2.7 mm). A schematic representation of the occurring shear stress distribution is presented in Figure A. From the maximum force ($F_m$), the inter-laminar shear strength (ILSS) was calculated according to Equation 4.

$$ILSS = \tau_3 = 0.75 \frac{F_m}{w \cdot t} \qquad (4)$$

w and t are the width and thickness of the test specimen. A minimum of 5 specimens was tested.

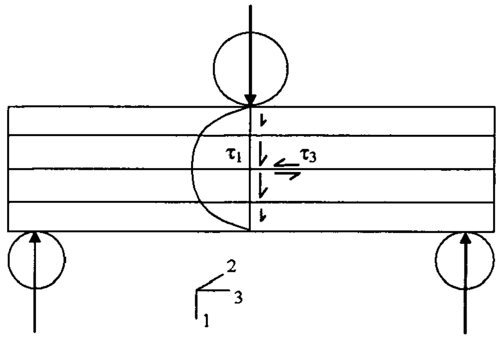


Figure A

Examples

**Example 1**

40 grams of caprolactam were divided over two test tubes. The initiator (0.6 mol% based on the amount of caprolactam) was then added to one test tube, whereas the activator (0.6 mol% based on the amount of caprolactam) was added to the other. After melting the material at 110°C, the contents of both tubes were mixed and then allowed to polymerize at 150°C.

For different samples, polymerization was interrupted at different points in time by quenching the sample containing test tubes in ice water, after which the degree of conversion was measured by water extraction.

Table 1 shows the initiation time and the time to achieve full conversion for caprolactam polymerizations using different activators and initiator. As can be taken from the results, in particular from Comparative Example 2 and Example 1, both the initiation time and the time for full conversion may effectively be delayed by using an aromatic carbamoyllactam activator.

Table 1

| Examples | Initiator | Activator | Initiation time [s] | Time for full conversion [s] |
|---|---|---|---|---|
| Comp. Example 1 | sodium caprolactamate | hexamethylene-1,6-dicarbamoylcaprolactam | 30 | 150 |
| Comp. Example 2 | caprolactam magnesium bromide | N-acetylcaprolactam | 30 | 160 |
| Comp. Example 3 | sodium caprolactamate | N-acetylcaprolactam | 180 | 900 |
| Example 1 | caprolactam magnesium bromide | tolylene-2,4-dicarbamoylcaprolactam | 1320 | 1920 |

**Example 2**

Two caprolactam solutions (one containing the initiator, and the second containing the activator) were prepared at 110°C in a nitrogen environment and then degassed at 10 mbar for 5 minutes. The solutions were subsequently mixed and infused at 250 mbar into balanced and symmetrical laminates consisting of 12 plies of glass fabrics, which were vacuum bagged and pre-heated to the required polymerization temperature. The composites were then allowed to cure

for 60 minutes before being demolded to make sure that the composites have reached both their final conversion and crystallinity.

Table 2 shows the void content and the inter-laminar shear strength (ILSS) of anionic polyamide-6 composites (50 vol% glass fibers), polymerized at various temperatures from compositions containing 1.2 mol% initiator (caprolactam magnesium bromide) and 1.2 mol% of an activator which is either an aliphatic carbamoyllactam (hexamethylene-1,6-dicarbamoylcaprolactam) or an aromatic one (tolylene-2,4-dicarbamoylcaprolactam). As can be taken from the results, composites obtained from compositions containing an aromatic carbamoyllactam activator display a superior inter-laminar shear strength and a reduced void content.

Table 2

| Examples | Activator | Polymerization temperature [°C] | Void content [vol%] | ILSS [MPa] |
|---|---|---|---|---|
| Comp. Example 4 | hexamethylene-1,6-dicarbamoylcaprolactam | 160 | 10 | 63 |
| Comp. Example 5 | hexamethylene-1,6-dicarbamoylcaprolactam | 170 | 4 | 60 |
| Comp. Example 6 | hexamethylene-1,6-dicarbamoylcaprolactam | 180 | 3 | 68 |
| Example 2 | tolylene-2,4-dicarbamoylcaprolactam | 170 | 1 | 81 |
| Example 3 | tolylene-2,4-dicarbamoylcaprolactam | 180 | 0.5 | 77 |

**Example 3**

Table 3 shows the inter-laminar shear stress (ILSS) for anionic polyamide-6 composites (50 vol% glass fibers) containing 1.2 mol% initiator (caprolactam magnesium bromide) and 1.2 mol% activator, which is either an aliphatic carbamoyllactam (hexamethylene-1,6-dicarbamoylcaprolactam) or an aromatic one (tolylene-2,4-dicarbamoylcaprolactam). Composites were infused at a given infusion temperature and subsequently heated up to the required polymerization temperature before polymerization initiated. As can be taken from the results, composites obtained from compositions containing an aromatic carbamoyllactam activator display a superior inter-laminar shear strength.

| Activator | Infusion temperature [°C] | Polymerization temperature [°C] | ILSS [MPa] |
|---|---|---|---|
| hexamethylene-1,6-dicarbamoylcaprolactam | 180 | 180 | 68 |
| tolylene-2,4-dicarbamoylcaprolactam | 180 | 180 | 77 |

**Example 4**

Two caprolactam solutions, one containing 1.2 mol% caprolactam magnesium bromide, and the other containing a mixture of 0.6 mol% aromatic activator (tolylene-2,4-dicarbamoylcaprolactam) and 0.6% aliphatic activator (hexamethylene-1,6-dicarbamoylcaprolactam) were prepared at 110°C in a nitrogen environment and degassed at 10 mbar for 5 minutes. The solutions were subsequently mixed and infused at 250 mbar and a temperature of 135°C into balanced and symmetrical laminates consisting of 12 plies of glass fabrics (50 vol%), which were vacuum bagged and pre-heated to 180°C. The composites were allowed to cure for 60 minutes before being demolded to make sure that the composites have reached both their final conversion and crystallinity. The ILSS of the resulting polyamide-6 composite was 75 MPa.

**Example 5**

Two caprolactam solutions, one containing 1.2 mol% caprolactam magnesium bromide, and the other containing a mixture of 1.2 mol% tolylene-α,4-dicarbamoylcaprolactam were prepared at 110°C in a nitrogen environment and

degassed at 10 mbar for 5 minutes. The solutions were subsequently mixed and infused at 250 mbar and a temperature of 135°C into balanced and symmetrical laminates consisting of 12 plies of glass fabrics (50 vol%), which were vacuum bagged and pre-heated to 180°C. The composites were allowed to cure for 60 minutes before being demolded to make sure that the composites have reached both their final conversion and crystallinity. The ILSS of the resulting polyamide-6 composite was 79 MPa.

The described vacuum infusion technology was successfully applied to infuse 2 to 60 mm thick thermoplastic composites with a fiber volume content of 50%. In addition, composite parts with a geometry that cannot be obtained by press-forming techniques (high drawing ratio) have been infused in one shot using the described technology. The thickness and complexity of these composite parts clearly demonstrate the advantages of the described reactive processing technology compared to traditional melt processing.

## Claims

1. Polymerizable composition for anionic polyamide-6 composites comprising:

   a lactam monomer,
   an initiator, and
   an activator according to formula (I)

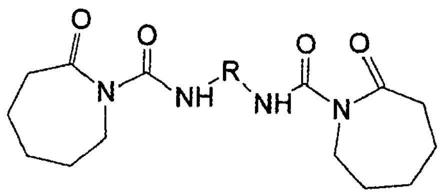

(I)

   wherein R is a divalent aromatic moiety.

2. Polymerizable composition according to claim 1, wherein the divalent aromatic moiety in formula (I) is selected from the group consisting of 2,4-tolylene, 2,6-tolylene and mixtures thereof, 2,4-phenylene, di-phenylene-methane, and $\alpha$,4 tolylene.

3. Polymerizable composition according to claims 1 or 2, wherein the activator is a combination of the aromatic carbamoyllactam compound and an aliphatic activator.

4. Polymerizable composition according to claim 3, wherein the aliphatic activator comprises a compound according to formula (I), wherein R is a divalent aliphatic moiety.

5. Polymerizable composition according to claim 4, wherein the divalent aliphatic activator is selected from the group consisting of lactam blocked 1,6-hexane-diisocyanate, lactam blocked isophorone-diisocyanate, lactam blocked xylylene-diisocyanate, lactam blocked hexane-1,4-diisocyanate, and lactam blocked methylene-di-cyclohexane-4,4'-diisocyanate.

6. Polymerizable composition according to any one of claims 1 to 5, wherein the initiator is selected from lactam magnesium halides.

7. Polymerizable compositions according to any one of claims 1 to 6, wherein the lactam magnesium halide is selected from the group consisting of caprolactam magnesium bromide, caprolactam magnesium chloride; mixtures of bis-lactam magnesium and magnesium-di-halide in molar ratios ranging from 1 to 2; Grignard-type compounds RMgX wherein X is a halide selected from chloride, bromide, or iodode and R is an alkyl or cyclic alkyl compound consisting of 1 to 6 C-atoms; and lactam calcium halides wherein the halide is chloride or bromide.

8. Polymerizable composition according to any one of claims 1 to 7, which further comprises 2-pyrrolidone.

**9.** Polymerizable composition according to claim 8, wherein the amount of 2-pyrrolidone ranges from 0.025 mol% to 0.125 mol%.

**10.** Polymerizable composition according to any one of claims 1 to 9, which further comprises a reinforcing agent.

**11.** Polymerizable composition according to claim 10, wherein the reinforcing agent is selected from the group consisting of milled, chopped, woven, non-woven or continuous glass fibers; rock wool fibers; mineral wool fibers; organic fibers and carbon fibers.

**12.** Polymerizable composition according to any one of claims 1 to 11, wherein the lactam monomer is selected from $C_4$- to $d_{16}$-cyclic lactams.

**13.** Polymerizable composition according to claim 12 wherein the lactam monomer is caprolactam.

**14.** Process for the production of an anionic polyamide composite comprising the steps of

(a) infusing a polymerizable composition according to any one of claims 1 to 13 into a mold at a temperature below the temperature of curing, and
(b) increasing the mold temperature for curing.

**15.** Process according to claim 14, wherein the mold comprises a pre-placed reinforcing agent.

**16.** Process according to claim 15, wherein the pre-placed reinforcing agent is selected from the group consisting of woven, non-woven or continuous glass fibers; rock wool fibers; mineral wool fibers; organic fibers and carbon fibers.

**17.** Process according to any one of claims 14 to 16, wherein the temperature of the polymerizable composition for infusion ranges from 80 to 180°C.

**18.** Process according to any one of claims 14 to 17, wherein the temperature of the mold during infusion ranges from 90 to 200°C.

**19.** Process according to any one of claims 14 to 18, wherein the temperature of curing ranges from 130 to 200°C.

**20.** Process according to any one of claims 14 to 19, wherein the composite is molded by vacuum infusion.

**21.** Process according to claim 20, wherein the vacuum pressure ranges from 150 to 400 mbar.

**22.** Composite obtainable from the process according to any one of claims 14 to 21.

**23.** Composite according to claim 22 wherein said composite is a structural composite.

**24.** Structural composite according to claim 23, wherein said structural composite is selected from the group consisting of wind turbine blades, structural and interior automotive parts, aeronautic and aerospace parts, pressure vessels, oil- or gas pipelines, off-shore equipment, and sports and leisure equipment.

Figure 1a:

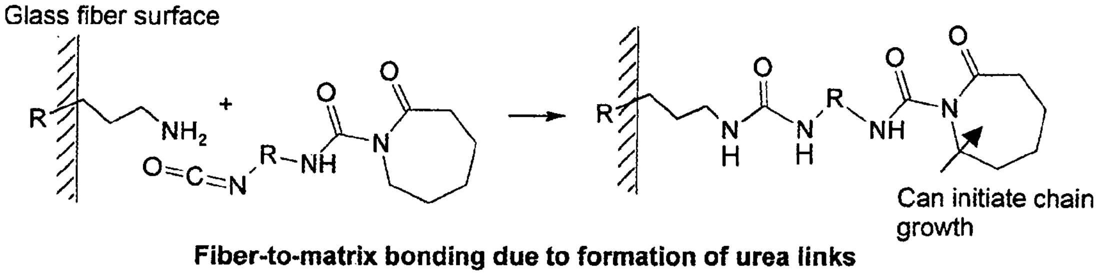


**Fiber-to-matrix bonding due to formation of urea links**

Figure 1b:

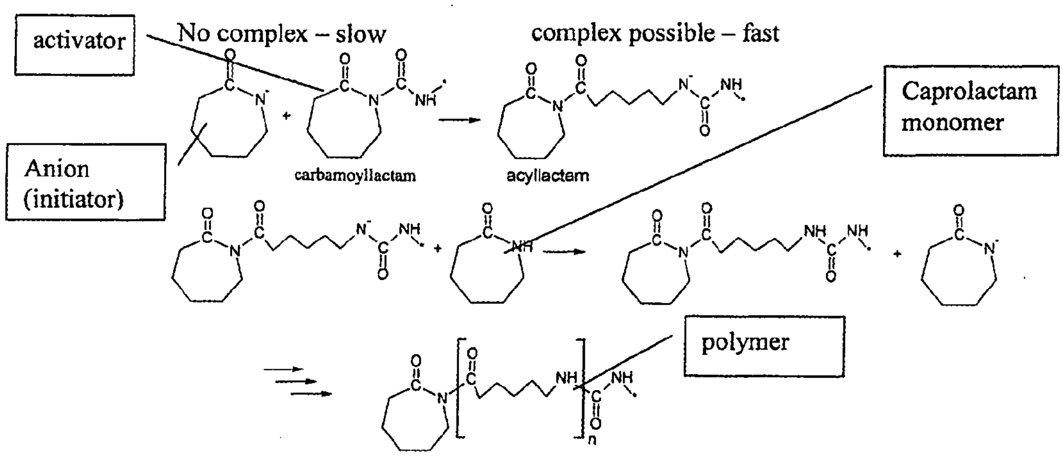

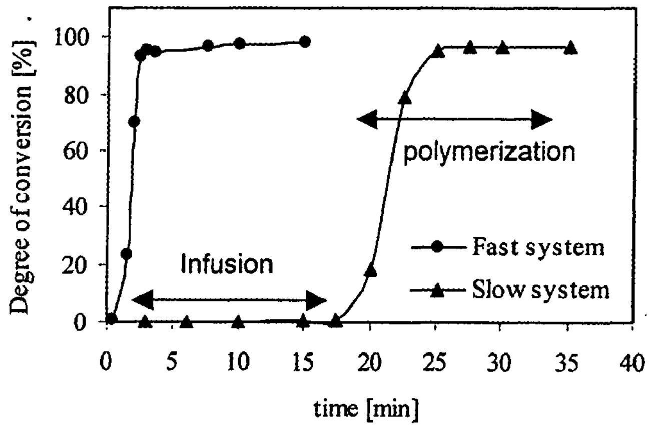
Degree of conversion [%]
100
80
60
40
20
0
0
5
10
15
20
25
30
35
40
time [min]
polymerization
Infusion
Fast system
Slow system

European Patent Office

# EUROPEAN SEARCH REPORT

Application Number
EP 07 00 6583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RU 2 074 866 C1 (AKTSIONERNOE OBSHCHESTVO OTKRY [RU]) 10 March 1997 (1997-03-10)<br>* abstract *<br>----- | 1-24 | INV.<br>C08G69/18<br>C08G69/20<br>C08L77/02 |
| X | US 3 322 715 A (CHARLES KUMNICK MILES) 30 May 1967 (1967-05-30)<br>* examples 14,15 *<br>* column 3, lines 31,32 *<br>----- | 1-24 | |
| X | FR 2 390 472 A (FIRESTONE TIRE & RUBBER CO [US]) 8 December 1978 (1978-12-08)<br>* page 9, lines 22-26 *<br>* page 18, lines 5-12 *<br>* claims 4,7 *<br>* page 3, line 18 - page 4, line 28 *<br>* page 8, line 24 - page 9, line 7 *<br>----- | 1-24 | |
| X | EP 0 135 233 A1 (STAMICARBON [NL]) 27 March 1985 (1985-03-27)<br>* claims 1,5; example X *<br>----- | 1-24 | TECHNICAL FIELDS SEARCHED (IPC) |
| Y | EP 0 786 484 A2 (INVENTA AG [CH]) 30 July 1997 (1997-07-30)<br>* page 3, line 59 - page 4, line 2 *<br>----- | 1-24 | C08G<br>C08L |
| Y | GB 908 220 A (ICI LTD) 17 October 1962 (1962-10-17)<br>* page 2, lines 26-49 *<br>* page 1, lines 26-33 *<br>-----<br>-/-- | 1-24 | |

The present search report has been drawn up for all claims

| Place of search | Date of completion of the search | Examiner |
|---|---|---|
| Munich | 12 July 2007 | Gerber, Myriam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

European Patent Office

# EUROPEAN SEARCH REPORT

Application Number
EP 07 00 6583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | VAN RIJSWIJK ET AL: "Optimisation of anionic polyamide-6 for vacuum infusion of thermoplastic composites: Influence of polymerisation temperature on matrix properties" POLYMER TESTING, ELSEVIER, vol. 25, no. 3, May 2006 (2006-05), pages 392-404, XP005408926 ISSN: 0142-9418 * abstract * ----- | 1-24 | |
| Y | VAN RIJSWIJK ET AL: "Optimisation of anionic polyamide-6 for vacuum infusion of thermoplastic composites: choice of activator and initiator" COMPOSITES PART A: APPLIED SCIENCE AND MANUFACTURING, ELSEVIER SCIENCE PUBLISHERS B.V., AMSTERDAM, NL, vol. 37, no. 6, June 2006 (2006-06), pages 949-956, XP005345447 ISSN: 1359-835X * abstract * ----- | 1-24 | TECHNICAL FIELDS SEARCHED (IPC) |

The present search report has been drawn up for all claims

| Place of search | Date of completion of the search | Examiner |
|---|---|---|
| Munich | 12 July 2007 | Gerber, Myriam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 07 00 6583

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2007

| Patent document cited in search report | Publication date | Patent family member(s) | Publication date |
| --- | --- | --- | --- |
| RU 2074866 C1 | 10-03-1997 | NONE | |
| US 3322715 A | 30-05-1967 | DE 1595079 A1 | 04-06-1970 |
| | | GB 1084723 A | 27-09-1967 |
| FR 2390472 A | 08-12-1978 | AR 220336 A1 | 31-10-1980 |
| | | BR 7802889 A | 16-01-1979 |
| | | CH 646985 A5 | 28-12-1984 |
| | | DE 2817778 A1 | 23-11-1978 |
| | | ES 469611 A1 | 16-10-1979 |
| | | IT 1113073 B | 20-01-1986 |
| | | JP 53138459 A | 02-12-1978 |
| | | LU 79588 A1 | 02-02-1979 |
| | | NL 7804762 A | 13-11-1978 |
| EP 0135233 A1 | 27-03-1985 | DE 3469360 D1 | 24-03-1988 |
| EP 0786484 A2 | 30-07-1997 | DE 19602684 C1 | 28-08-1997 |
| | | JP 9208691 A | 12-08-1997 |
| | | US 5864007 A | 26-01-1999 |
| GB 908220 A | 17-10-1962 | NONE | |

EPO FORM P0459

For more details about this annex : see Official Journal of the European Patent Office, No. 12/82